**Europäisches Patentamt**

**European Patent Office**

**Office européen des brevets**

(19)

(11) Veröffentlichungsnummer: **0 166 364**
**A2**

(12) # EUROPÄISCHE PATENTANMELDUNG

(21) Anmeldenummer: 85107563.0

(51) Int. Cl.⁴: **A 61 C 19/00**

(22) Anmeldetag: 19.06.85

(30) Priorität: 28.06.84 DE 3423896

(71) Anmelder: **Espe Fabrik Pharmazeutischer Präparate GmbH, D-8031 Seefeld / Obb (DE)**

(43) Veröffentlichungstag der Anmeldung: **02.01.86 Patentblatt 86/1**

(72) Erfinder: **Herold, Wolf-Dietrich, Dr., Höhenweg 13, D-8031 Seefeld/Obb. (DE)**

(74) Vertreter: **Strehl, Schübel-Hopf, Schulz, Widenmayerstrasse 17 Postfach 22 03 45, D-8000 München 22 (DE)**

(84) Benannte Vertragsstaaten: **AT BE CH DE FR GB IT LI LU NL SE**

(54) Gerät zum Bestrahlen von Dentalwerkstoffen.

(57) Ein Gerät zur Bestrahlung von Zahnfüllmassen in situ weist eine Leuchtstoffröhre (10), eine die Leuchtstoffröhre umgebende Hülse (11) und einen an eine Stirnseite der Hülse (11) angekoppelten Lichtleiter (15) auf. Die Hülse (11) ist mit einem Fluoreszenzstoff dotiert, der die Strahlung der Leuchtstoffröhre (10) absorbiert und Strahlung mit einem für die Behandlung der Zahnfüllmasse geeigneten Spektrum innerhalb der Hülse (11) emittiert, wobei diese emittierte Fluoreszenzstrahlung durch Total-Reflektion innerhalb der Hülse in Axialrichtung geführt wird und am Austrittsende des Lichtleiters (15) zur Verfügung steht. Infolge des hohen elektrisch-optischen Wirkungsgrades und wegen der Tatsache, dass weder Filter- noch Kühlvorrichtungen erforderlich sind, lässt sich das Gerät als leichtes und kleines Handgerät ausführen.

ESPE Fabrik pharmazeutischer
Präparate GmbH

EPA-23041

**0 166 364**

19. Juni 1985

## Gerät zum Bestrahlen von Dentalwerkstoffen

Die Erfindung betrifft ein Gerät zum Bestrahlen von Dentalwerkstoffen der im Oberbegriff des Anspruchs 1 angegebenen Gattung.

Ein derartiges Gerät ist aus der deutschen Gebrauchsmusterschrift Nr. 8 228 416 bekannt. Die dort als Strahlungsquelle eingesetzte Leuchtstoffröhre gestattet es, durch Verwendung geeigneter Leuchtstoffe ein auf den zu behandelnden Dentalwerkstoff abgestimmtes, eng begrenztes Strahlungsspektrum zu erzeugen. Zum Auspolymerisieren von Kunststoff-Zahnfüllmassen liegt das nutzbare Spektrum beispielsweise im Wellenlängenbereich von 400 bis 500 nm. Kürzerwellige Ultraviolettstrahlung ist wegen allgemeiner Augenschädigung, längerwelliges sichtbares Licht wegen Blendeffekten und Infrarotstrahlung wegen schädigender Temperaturerhöhung am Zahn unerwünscht. Wegen der Begrenzbarkeit auf den gewünschten, nutzbaren Spektralbereich entfallen daher bei Leuchtstoffröhren aufwendige Filter- und Kühlvorrichtungen, wie sie bei punktförmigen Strahlungsquellen, etwa Festkörperstrahlern (Glühwendeln) erforderlich sind, die ein kontinuierliches breites Strahlungsspektrum mit großen Anteilen außerhalb des nutzbaren Bereichs, insbesondere im Infrarotbereich, erzeugen.

Eine Schwierigkeit besteht jedoch darin, die von einer Leuchtstoffröhre emittierte Strahlung auf eine kleine Fläche, etwa auf den Bereich einer Zahnkavität bzw. das Lichteintrittsende eines Lichtleiters, zu fokussieren. Bei dem Gerät nach der erwähnten Gebrauchsmusterschrift Nr. 8 228 416 wird eine solche Fokussierung über einen die Leuchtstoffröhre teilweise umgebenden kugelkalottenförmigen Reflektor und eine diesem gegenüber angeordnete Linse versucht. Wegen der räumlichen Ausdehnung der Leuchtstoffröhre gelingt eine Fokussierung mit diesen Mitteln jedoch nur mangelhaft, so daß ein großer Teil der gesamten emittierten Strahlung nicht ausgenutzt werden kann und damit der bei Leuchtstoffröhren an sich gegebene Vorteil eines hohen elektrisch-optischen Wirkungsgrades größtenteils verlorengeht.

Der Erfindung liegt die Aufgabe zugrunde, ein Gerät der eingangs bezeichneten Gattung anzugeben, bei dem die Strahlung der Strahlungsröhre mittels einer unaufwendigen und raumsparenden Einrichtung möglichst weitgehend ausgenutzt wird, um Strahlung gleichmäßiger Leuchtdichte in dem zum Behandeln von Dentalwerkstoffen jeweils geeigneten Spektralbereich über eine kleine Fläche, wie sie etwa einer Zahnkavität oder dem Eintrittsende eines Lichtleiters entspricht, zur Verfügung zu stellen.

Die erfindungsgemäße Lösung dieser Aufgabe ist im Kennzeichenteil des Patentanspruchs 1 angegeben. Die danach vorgesehene, die Strahlungsröhre umgebende Hülse aus strahlungsdurchlässigem Material ist mit einem oder mehreren Fluoreszenzstoffen versehen, die sich so wählen lassen, daß die Fluoreszenzstrahlung in dem zur Behandlung der jeweiligen Dentalwerkstoffe geeigneten Spektralbereich liegt. Es sind sowohl organische als auch anorganische Fluoreszenzstoffe einsetzbar. Dabei läßt sich sowohl monochromatische als auch Mischstrahlung (z.B. weißes Licht) erzeugen. Da die Hülse die Strahlungsröhre vollständig umschließen kann, läßt sich deren Strahlung im wesentlichen vollständig zur Anregung der Fluoreszenz ausnutzen. Die isotrope Strahlung der einzelnen Fluoreszenzpartikel verbleibt bei ausreichender Dünnwandigkeit der Hülse aufgrund der Totalreflexion, die daraus resultiert, daß das Hülsenmaterial einen Brechungsindex gegen die Umgebung von größer als 1, vorzugsweise größer als 1,45 hat, größtenteils in der Hülse und bewegt sich auf kreisförmigen Zickzack-Bahnen verlustarm zu den Hülsenstirnflächen, an denen sie austritt bzw. in einen dort ansetzenden Lichtleiter einkoppelbar ist. Auf diese Weise läßt sich mit geringsten Mitteln die Strahlung der im Innern der Hülse angeordneten Strahlungsröhre fast vollständig absorbieren, die Strahlungsenergie in ein begrenztes Strahlungsband umwandeln, in die zur Achse der Strahlungsröhre parallele Richtung umlenken und mit hoher Dichte an einer definierten Fläche zur Verfügung stellen.

Die Weiterbildungen der Erfindung nach den Ansprüchen 2 und 3 ergeben besonders effektive und in ihrem Aufbau einfache Gestaltungen, die Ausführungen nach Anspruch 4 und 5 sind zur Erhöhung der Lichtausbeute und Konzentrierung der Fluoreszenzstrahlung von Vorteil. Die Weiterbildung der Erfindung nach Anspruch 8 ist insofern günstig, als die Hülse selbst vollständig transparent sein und daher die Fluoreszenzstrahlung in Axialrichtung mit möglichst geringen Verlusten transportieren kann. Bei der Weiterbildung der Erfindung nach Anspruch 9 werden Verluste der Fluoreszenzstrahlung durch Reabsorption vermieden. Eine weitere Steigerung des Wirkungsgrades läßt sich gemäß Anspruch 10 erzielen, wonach die von der ersten Hülse nicht total-reflektierte Strahlung von einer zweiten Hülse aufgefangen und zur Anregung von Fluoreszenzstrahlung ausgenutzt wird. Die Weiterbildungen der Erfindung nach den Ansprüchen 11 und 12 sind für die praktische Gestaltung eines Bestrahlungsgerätes günstig.

Ausführungsbeispiele der Erfindung werden nachstehend anhand der Zeichnungen näher erläutert. In den Zeichnungen zeigen

Fig. 1 einen schematischen Längsschnitt durch ein Bestrahlungsgerät für Dentalwerkstoffe, und

Fig. 2 bis 6 schematische Darstellungen zur Erläuterung einzelner Merkmale und Varianten des Gerätes nach Fig. 1.

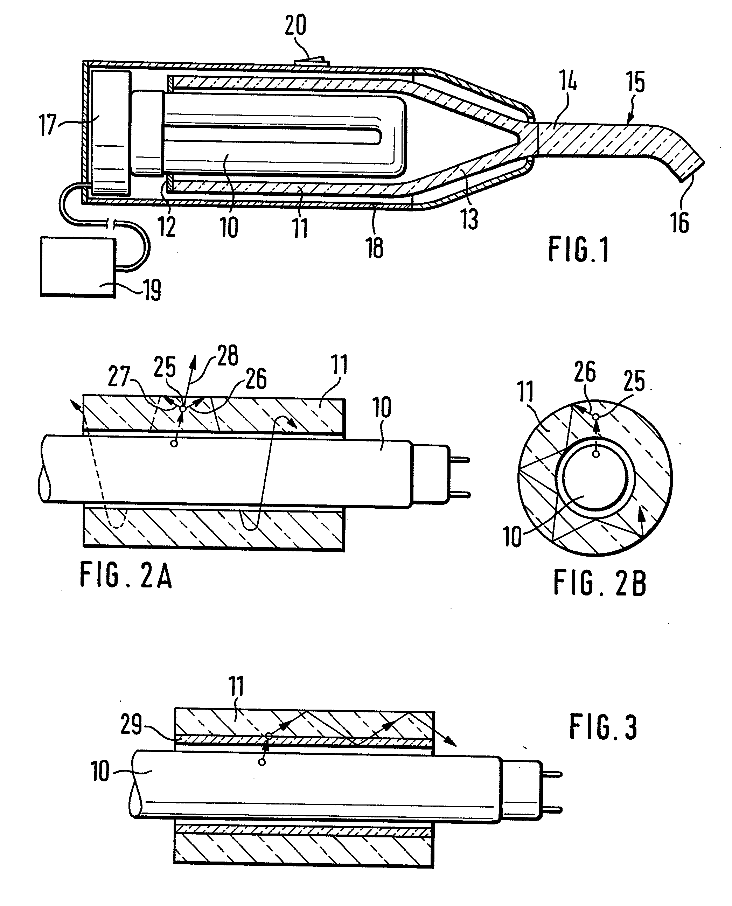

Das in Fig. 1 gezeigte Gerät enthält eine U-förmige Leuchtstoffröhre 10, die von einer im Querschnitt ovalen Hülse 11 umgeben ist. Die Hülse 11 ist an ihrem in Axialrichtung hinteren Ende bei 12 verspiegelt und an ihrem anderen, vorderen Ende mittels eines Übergangsteils 13 mit dem in Axialrichtung der Leuchtstoffröhre 10 weiterführenden Eintrittsende 14 eines Lichtleiters 15 gekoppelt, der mit seinem Austrittsende 16 auf den Bestrahlungsort, beispielsweise eine Kunststoff-Füllung in einer Zahnkavität im Mund eines Patienten, gerichtet werden kann. Die Leuchtstoffröhre 10 ist mit ihren Anschlußstiften in ein Sockelteil 17 eingesteckt, in dem auch eine elektrische Schaltung zum Betrieb der Leuchtstoffröhre 10 untergebracht sein kann. Die soweit beschriebene Anordnung ist von einem länglichen und im Querschnitt runden oder ovalen Gehäuse 18 umgeben, an dessen hinterem Ende ein Kabel zum Anschluß an ein Stromversorgungsgerät 19 austritt. Der Lichtleiter 15 ragt am vorderen Ende aus dem Gehäuse 18 heraus und kann in seinem äußeren Bereich aus hygienischen Gründen und zur Vermeidung des seitlichen Austritts von störendem Licht mit einer (nicht gezeigten) abnehmbaren Abdeckung versehen sein. An der Außenseite des Gehäuses sind Schalt- und Einstellorgane angeordnet, von denen bei 20 ein Einschalter angedeutet ist.

Die Hülse 11 besteht aus einem strahlungsdurchlässigen Material, bei dem es sich um Glas oder Kunststoff, insbesondere um Polymethylmethacrylat, handeln kann. Dieses Material, das gegen die umgebende Luft einen Brechungsindex größer als 1 hat, ist mit einem fluoreszierenden Farbstoff dotiert, von dem eine Partikel in der schematischen Darstellung nach Fig. 2A und 2B bei 25 angedeutet ist. Wird diese Farbstoffpartikel von Strahlung aus der Leuchtstoffröhre 10 getroffen, so wird sie zur Fluoreszenz angeregt. Von der von diesem Fluoreszenzzentrum ausgehenden isotropen Strahlung sind in Fig. 2A drei Strahlen veranschaulicht, nämlich ein Strahl 26, der in Vorwärtsrichtung derart schräg auf die

- 5 -

äußere Grenzfläche der Hülse 11 trifft, daß er dort totalreflektiert wird und sich auf einer in Fig. 2A und 2B schematisch gezeigten kreisförmigen Zickzack-Bahn zum rechten Ende der Hülse 11 bewegt. Ein zweiter Strahl 27 trifft in Rückwärtsrichtung schräg auf die äußere Grenzfläche der Hülse 11 und bewegt sich auf einer ähnlichen kreisförmigen Zickzackbahn gegen das hintere Ende der Hülse 11. Dargestellt ist ferner ein dritter Strahl 28, der die äußere Grenzfläche der Hülse 11 derart steil trifft, daß er nicht reflektiert wird, sondern die Hülse 11 als Verluststrahlung verläßt. Der in der Hülse 11 verbleibende total-reflektierte Anteil T der gesamten Fluoreszenzstrahlung beträgt etwa

$$T = (1 - \frac{1}{n^2})^{1/2},$$

wobei n der Brechungsindex des Hülsenmaterials ist. Bei einem Brechungsindex von n ≈ 1,49 für Polymethylmethacrylat ergibt sich ein Wert von T ≈ 0,75, daß heißt ein Verlust von etwa 25%.

Die Hülse 11 ist in der Lage, die von der Leuchtstoffröhre 10 in ihrem Inneren emittierte Strahlung fast vollständig zu absorbieren und Strahlung eines begrenzten Spektrums als Fluoreszenzstrahlung abzugeben, wobei der überwiegende Anteil dieser Fluoreszenzstrahlung im wesentlichen senkrecht zur Emissionsrichtung der Leuchtstoffröhre 10 und zwar in Axialrichtung zu dieser geführt wird und mit hoher Dichte an den Stirnflächen der Hülse 11 austritt. Dieser Vorgang trifft für alle Wellenlängen der elektromagnetischen Strahlung im ultravioletten, visuellen und infraroten Spektralbereich zu, wobei die Umwandlung stets von einer niedrigeren Wellenlänge auf die gleiche oder eine höhere Wellenlänge erfolgt. Vorteilhafterweise ist der fluoreszierende Farbstoff so gewählt, daß sein Absorptionsspektrum und sein Emissionsspektrum einander wenig, insbesondere um weniger als 25 %, überlappen, um Verluste durch Reabsorption zu vermeiden.

Fluoreszierende Farbstoffe, die sich für den beschriebenen Zweck eignen, sind etwa aus den deutschen Offenlegungschriften Nr. 3 001 857 und Nr. 3 235 526 bekannt.

Während bei der Ausführungsform nach Fig. 2 angenommen ist, daß die Fluoreszenzstoff-Partikel in das Material der Hülse 11 eingebettet sind, läßt sich der gleiche Effekt der Umwandlung und Umlenkung der von der Leuchtstoffröhre 10 emittierten Strahlung gemäß Fig. 3 auch dadurch erreichen, daß auf der inneren und/ oder der äußeren Wand der Hülse 11 ein dünner Film 29 aus mit fluoreszierendem Farbstoff dotiertem strahlungsdurchlässigen Material aufgebracht wird, wobei die Hülse 11 in diesem Fall aus undotiertem strahlungsdurchlässigen Material besteht.

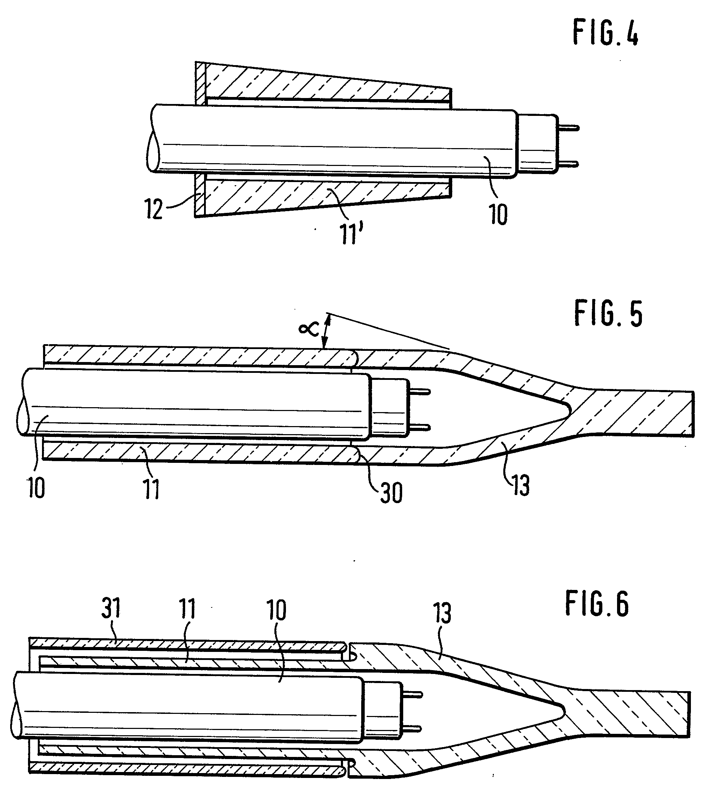

Die Strahlungsdichte an den Stirnflächen der Hülse 11 hängt von der Wandstärke ab. Fig. 4 zeigt eine Variante, bei der die Hülse 11' leicht konisch mit vom hinteren, linken zum vorderen, rechten Ende abnehmender Dicke gestaltet ist. Dadurch läßt sich die Strahlungsdichte an der rechten Stirnfläche erhöhen. In Fig. 4 ist ferner auch am hinteren Ende der Hülse 11' die Verspiegelung 12 gezeigt, bei der es sich um eine aufgedampfte Silber- oder Aluminiumschicht handeln kann. Dadurch wird die nach hinten gerichtete Fluoreszenzstrahlung reflektiert, so daß die am vorderen Ende austretende Strahlung verstärkt wird.

Eine Bündelung der an der vorderen Stirnfläche der Hülse 11 zur Verfügung stehenden Strahlung wird dadurch erreicht, daß an diese Stirnfläche das verjüngende zusammengeführtes Übergangsteil 13 anschließt, das die ringförmige Querschnittsfläche der Hülse auf eine beispielsweise kreisförmige geschlossene Querschnittsfläche vereinigt. Die Umlenkung der Strahlung in diesem Übergangsteil 13 ist problemlos, sofern der in Fig. 5
eingezeichnete Konuswinkel α ausreichend klein ist.

Das Übergangsteil 13 besteht vorzugsweise aus
undotiertem Material, um Reabsorption der in der Hülse
erzeugten Fluoreszenzstrahlung mindestens in diesem
Teil zu vermeiden.

Das Übergangsteil 13 kann an die Hülse 11 einstückig angeformt sein; es kann jedoch auch aus
anderem, strahlungsdurchlässigem Material bestehen und
an die Hülse 11 angesetzt sein, wobei die Austrittsfläche 30 der Hülse 11 zur Verbesserung der Lichteinkopplung in das undotierte Übergangsteil 13 vorzugsweise
konvex gekrümmt ist.

Wie oben erwähnt, kann die Hülse 11 aus Glas oder
Kunststoff, insbesondere Polymethylmethacrylat, bestehen.
Kunststoff ist als Hülsenmaterial auch bei kurzwelligen
Strahlungsteilen der Leuchtstoffröhre 10, etwa unter 400 nm,
möglich, da in Kunststoffen mit verminderter Transmission im
kurzwelligen Bereich diese Strahlung nur kurze Wege bis zur
Absorption durch eine Fluoreszenzstoff-Partikel zurückzulegen hat,
während das längerwellige Fluoreszenzlicht fast verlustfrei lange Wege im Kunststoff durchlaufen kann.

Die in Fig. 6 gezeigte Variante erbringt eine
wesentliche Erhöhung des optischen Wirkungsgrades dadurch,
daß die innere Hülse 11 von einer zweiten, äußeren Hülse
31 umgeben ist. Dabei ist die innere Hülse 11 mit einem
Farbstoff dotiert, der die Strahlung der Leuchtstoffröhre
10 absorbiert und in einem höheren Spektralbereich
fluoresziert, während die äußere Hülse 31 mit einem Farbstoff dotiert ist, der im Spektralbereich der von der
inneren Hülse 11 emittierten Fluoreszenzstrahlung absorbiert und in einem noch höheren Wellenlängenbereich
fluoresziert. Somit wird die bei Polymethylmethacrylat
als Hülsenmaterial 25-prozentige Verluststrahlung der inneren Hülse 11 von der zweiten Hülse größtenteils erneut in Fluoreszenzstrahlung umgewandelt, und diese Fluoreszenzstrahlung wird wiederum zu etwa 75% in Axialrichtung geführt. Die Einkopplung und Vermischung der Strahlungen der beiden Hülsen 11 und 31 erfolgt dabei an der Eintrittsfläche des Übergangsteils 13.

Bei dem in Fig. 1 gezeigten Lichtleiter 15 kann es sich um ein getrenntes Bauteil handeln, dessen Eintrittsende 14 an das Lichtaustrittsende des Übergangsteils 13 angekoppelt ist. Dabei kann ein Flüssigkeits- oder ein Glasfaser-Lichtleiter verwendet werden. Andererseits ist es auch möglich, den Lichtleiter 15 mit dem Übergangsteil 13 einstückig herzustellen.

In den schematischen Darstellungen nach Fig. 2 bis 6 ist eine gerade Leuchtstoffröhre 10 veranschaulicht, bei deren Verwendung der gesamte Aufbau in Querschnitt kreisförmig wird. Derartige Leuchtstoffröhren benötigen an beiden Enden elektrische Anschlüsse, wobei die elektrische Zuführung zu den vorderen Anschlüssen entweder durch das Übergangsteil 13 hindurch oder im Zwischenraum zwischen Leuchtstoffröhre 10 und Hülse 11 erfolgen kann. Die in Fig. 1 gezeigte U-förmig gebogene Leuchtstoffröhre ergibt dagegen eine handlichere Baugröße und vereinfacht die elektrische Versorgung der Leuchtstoffröhre ausschließlich vom hinteren Ende her.

Infolge des bei dem oben beschriebenen prinzipiellen Aufbau erreichten hohen optischen Wirkungsgrades läßt sich am Austrittsende 16 des Lichtleiters 15 eine zum Bestrahlen von Zahnfüllmassen ausreichend hohen Strahlungsdichte in dem zur Polymerisation der Zahnfüllmassen verwendbaren engen Spektralbereich bei verhältnismäßig geringer elektrischer Eingangsleistung erzeugen, so daß sich aufwendige Kühl- und Filtereinrichtungen erübrigen und das hier beschriebene Gerät sich als kleines und leichtes Handgerät ausführen läßt.

Beim Betrieb wird das Gerät so geführt, daß das Austrittsende 16 des Lichtleiters 15 auf die zu bestrahlende Stelle gerichtet wird. Mit Hilfe des Einschalters 20 wird die Leuchtstoffröhre 10 eingeschaltet, wobei deren Brenndauer von einer Schaltung vorgegeben sein kann, so daß die Lampe nach Ablauf der Brenndauer automatisch abschaltet. Ein weiterer, nicht gezeigter Schalter kann dazu dienen, das Gerät in einen Bereitschaftszustand zu versetzen, in dem die Leuchtstoffröhre 10 mit einem geringeren Vorheizstrom versorgt wird, damit sich die Lampe bei Betätigen des Einschalters 20 sofort auf volle Strahlungsleistung umschalten läßt.

Gemäß Fig. 1 erfolgt die Speisung der Leuchtstoffröhre 10 über das Kabel von dem separaten Stromversorgungsgerät 19 aus, bei dem es sich um einen Netztransformator oder eine Batterie handeln kann. Statt dessen können auch Batterien in einer hinteren Kammer des gegenüber der Darstellung nach Fig. 1 verlängerten Gehäuses 18 untergebracht sein. Als weitere Variante kann in einem ähnlich verlängerten Gehäuse ein Akkumulator eingebaut und das Gehäuse mit einer Steckverbindung versehen sein, die im Bereitschaftszustand des Bestrahlungsgerätes in eine entsprechende Buchse des Stromversorgungsgerätes 19 eingesteckt wird. In diesen letzteren beiden Varianten ergibt sich der Vorteil, daß der eigentliche Arbeitsteil des Bestrahlungsgerätes kabellos und daher besonders unbehindert zu handhaben ist.

In den obigen Ausführungsbeispielen ist die Strahlungsröhre 10 als Leuchtstoffröhre angenommen worden, die gewöhnlich im sichtbaren Bereich emittiert. Statt dessen können auch andere Strahlungsröhren, die z.B. im UV-Bereich emittieren, oder auch röhrenförmige Lampen, z.B. mit axial verlaufendem Glühfaden, eingesetzt werden.

PATENTANSPRÜCHE

1. Gerät zum Bestrahlen von Dentalwerkstoffen, insbesondere Zahnfüllmassen in situ, umfassend eine Strahlungsröhre (10), einen Lichtleiter (15) mit einem auf den Bestrahlungsort richtbaren Austrittsende (16) und eine Koppeleinrichtung (11), die Strahlung der Strahlungsröhre (10) aufnimmt und Strahlung in den Lichtleiter (15) richtet, dadurch g e k e n n - z e i c h n e t , daß die Koppeleinrichtung eine die Strahlungsröhre (10) umgebende Hülse (11) umfaßt, die aus strahlungsdurchlässigem Material mit einem Brechungsindex gegen ihre Umgebung größer als 1 besteht und mit Fluoreszenzstoff versehen ist, dessen Absorptionsspektrum das Emissionsspektrum der Strahlungsröhre (10) mindestens teilweise überlappt.

2. Gerät nach Anspruch 1, dadurch g e k e n n - z e i c h n e t , daß die Hülse (11) an ihrem einen Ende über ein verjüngend zusammengeführtes Übergangsteil (13) mit dem Eintrittsende (14) des Lichtleiters (15) verbunden ist.

3. Gerät nach Anspruch 2, dadurch  g e k e n n -
z e i c h n e t ,   daß das Übergangsteil (13) mit
der Hülse (11) und/oder dem Lichtleiter (15) einstückig
geformt ist.

4. Gerät nach Anspruch 2 oder 3, dadurch  g e k e n n -
z e i c h n e t ,   daß die Hülse (11) an ihrem anderen
Ende verspiegelt (12) ist.

5. Gerät nach einem der Ansprüche 2 bis 4, dadurch
g e k e n n z e i c h n e t ,   daß die Hülse (11')
mit auf das besagte eine Ende zu abnehmender Dicke
konisch geformt ist.

6. Gerät nach einem der Ansprüche 1 bis 5, dadurch
g e k e n n z e i c h n e t ,   daß die Hülse (11)
aus Glas  oder Kunststoff, vorzugsweise Polymethylmethacrylat, besteht.

7. Gerät nach einem der Ansprüche 1 bis 6, dadurch
g e k e n n z e i c h n e t ,   daß der Fluoreszenzstoff im Material der Hülse (11) enthalten ist.

8. Gerät nach einem der Ansprüche 1 bis 6, dadurch
g e k e n n z e i c h n e t ,   daß der Fluoreszenzstoff in einem auf der inneren und/oder äußeren Oberfläche der Hülse (11) angeordneten Film (29) enthalten ist.

9. Gerät nach einem der Ansprüche 1 bis 8, dadurch g e k e n n z e i c h n e t , daß der Spektralbereich, in dem der Fluoreszenzstoff emittiert, den Spektralbereich, in dem er absorbiert, um weniger als 25 % überlappt.

10. Gerät nach einem der Ansprüche 1 bis 9, dadurch g e k e n n z e i c h n e t , daß die Hülse (11) von einer ebenfalls mit dem Lichtleiter (15) gekoppelten zweiten Hülse (31) umgeben ist, die mit einem Fluoreszenzstoff versehen ist, der vom Fluoreszenzstoff der ersten Hülse (11) emittierte Strahlung absorbiert.

11. Gerät nach einem der Ansprüche 1 bis 10, dadurch g e k e n n z e i c h n e t , daß die Strahlungsröhre (10) U-förmig gebogen ist und die Hülse (11) beide Schenkel der U-Form umgibt.

12. Gerät nach einem der Ansprüche 1 bis 11, dadurch g e k e n n z e i c h n e t , daß es eine Batterie oder einen Akkumulator zur Versorgung der Strahlungsröhre (10) enthält.

13. Gerät nach einem der Ansprüche 1 bis 12, dadurch g e k e n n z e i c h n e t , daß die Strahlungsröhre (10) eine Leuchtstoffröhre ist.

FIG.1

FIG.2A

FIG.2B

FIG.3

FIG.4

12    11'    10

FIG.5

∝

10    11    30    13

FIG.6

31    11    10    13